(19) Europäisches Patentamt / European Patent Office / Office européen des brevets

(11) **EP 4 369 505 A1**

(12) **EUROPEAN PATENT APPLICATION**
published in accordance with Art. 153(4) EPC

(43) Date of publication:
**15.05.2024 Bulletin 2024/20**

(21) Application number: **22837715.6**

(22) Date of filing: **06.07.2022**

(51) International Patent Classification (IPC):
*H01M 50/489* (2021.01)       *H01M 50/42* (2021.01)
*H01M 50/434* (2021.01)       *H01M 50/443* (2021.01)
*H01M 50/446* (2021.01)       *H01M 50/451* (2021.01)

(52) Cooperative Patent Classification (CPC):
H01M 50/42; H01M 50/434; H01M 50/443;
H01M 50/446; H01M 50/451; H01M 50/489;
Y02E 60/10

(86) International application number:
**PCT/JP2022/026876**

(87) International publication number:
**WO 2023/282301 (12.01.2023 Gazette 2023/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.07.2021  JP 2021112849**

(71) Applicant: **Japan Vilene Company, Ltd.
Tokyo 104-8423 (JP)**

(72) Inventors:
• **KAWANO Akihiko
  Koga-shi, Ibaraki 306-0213 (JP)**

• **CHO Hiroki
  Koga-shi, Ibaraki 306-0213 (JP)**
• **TARAO Takashi
  Koga-shi, Ibaraki 306-0213 (JP)**
• **YAMAMOTO Emi
  Koga-shi, Ibaraki 306-0213 (JP)**
• **TANAKA Masanao
  Koga-shi, Ibaraki 306-0213 (JP)**

(74) Representative: **van Dam, Vincent
  Octrooibureau Vriesendorp & Gaade B.V.
  Koninginnegracht 19
  2514 AB Den Haag (NL)**

(54) **ALKALINE BATTERY SEPARATOR**

(57)    The present disclosure is an alkaline battery separator that includes a porous substrate and zirconia particles and satisfies at least one of (1) the half width of the peak with the highest intensity that appears when the alkaline battery separator is measured by X-ray diffraction is 0.40 degrees or more, (2) the zirconia particles contained in the alkaline battery separator has a peak in the range of 3200 to 3600 cm$^{-1}$ when measured by FT-IR, and (3) the zirconia particles contained in the alkaline battery separator has a moisture content of 2.0% or more.

EP 4 369 505 A1

**Description**

TECHNICAL FIELD

The present disclosure relates to an alkaline battery separator.

BACKGROUND ART

Conventionally, a separator has been used to separate the positive and negative electrodes of a battery to prevent a short circuit, and to retain an electrolyte to facilitate an electromotive reaction. The electrodes expand and contract as the battery is charged and discharged, and pressure is applied to the separator due to the expansion and contraction of the electrodes. Hence, if the separator cannot retain a sufficient amount of electrolyte, the battery becomes unusable. In order to extend the life of batteries, a separator with excellent electrolyte retention properties has been in demand.

As such a separator with excellent electrolyte retention properties, for example, Patent Literature 1 discloses a nonwoven fabric that has a porous layer made of fine particles of an inorganic oxide such as titania or zirconia on surfaces of fibers constituting the nonwoven fabric, and it discloses that the nonwoven fabric is preferably used for alkaline secondary battery separators.

CITATION LIST

PATENT LITERATURE

Patent Literature 1: JP 1999-315472A

SUMMARY OF THE INVENTION

TECHNICAL PROBLEM

Although the alkaline battery separator disclosed in Patent Literature 1 certainly has good electrolyte retention properties, it is not sufficient.

The present disclosure has been made under such circumstances to provide an alkaline battery separator that has better electrolyte retention properties.

SOLUTION TO THE PROBLEM

The inventors of the present disclosure have found that an alkaline battery separator with excellent electrolyte retention properties can be obtained if the alkaline battery separator includes a porous substrate and zirconia particles and satisfies at least one of (1) to (3) below.

(1) The half width of the peak with the highest intensity that appears when the alkaline battery separator is measured by X-ray diffraction is 0.40 degrees or more.
(2) The zirconia particles contained in the alkaline battery separator has a peak in the range of 3200 to 3600 $cm^{-1}$ when measured by Fourier Transform Infrared Spectroscopy (FT-IR) .
(3) The zirconia particles contained in the alkaline battery separator has a moisture content of 2.0% or more.

That is, according to an aspect of the present disclosure, an alkaline battery separator includes a porous substrate and zirconia particles, in which the half width of the peak with the highest intensity that appears when the alkaline battery separator is measured by X-ray diffraction is 0.40 degrees or more.

In another aspect of the present disclosure, an alkaline battery separator includes a porous substrate and zirconia particles, in which the zirconia particles contained in the alkaline battery separator has a peak in the range of 3200 to 3600 $cm^{-1}$ when measured by FT-IR.

In still another aspect of the present disclosure, an alkaline battery separator includes a porous substrate and zirconia particles, in which the zirconia particles contained in the alkaline battery separator has a moisture content of 2.0% or more.

It is preferable that the porous substrate and the zirconia particles be bonded by a binder containing an acrylic-based resin.

It is preferable that the zirconia content of the zirconia particles be 95 mass% or more.

It is preferable that the zirconia particles include zirconia having a cubic or tetragonal crystal structure.

ADVANTAGEOUS EFFECTS OF THE INVENTION

According to the present disclosure, an alkaline battery separator that has better electrolyte retention properties can be obtained.

DESCRIPTION OF THE INVENTION

An alkaline battery separator of the present disclosure (hereinafter also referred to as a separator) contains zirconia particles. The zirconia particles mainly contribute to an increase in the specific surface area, the electrolyte retention properties due to hydration water contained in zirconia, and the electrolyte resistance of the separator. Incidentally, the zirconia particles of the present disclosure refer to particles whose main component is zirconia. The zirconia content of the zirconia particles is preferably 95 mass% or more, more preferably 98 mass% or more, and further preferably 99 mass% or more. The higher the zirconia content of the zirconia particles, the higher the purity of the zirconia particles, and therefore the better the electrochemical and chemical stability of the zirconia particles. A separator including such zirconia is considered to have better electrolyte retention properties.

The separator of the present disclosure satisfies at least one of (1) to (3) below, and as a result, the separator has excellent electrolyte retention properties.

(1) The half width of the peak with the highest intensity that appears when the separator is measured by X-ray diffraction is 0.40 degrees or more.
(2) The zirconia particles contained in the alkaline battery separator has a peak in the range of 3200 to 3600 $cm^{-1}$ when measured by FT-IR.
(3) The zirconia particles contained in the alkaline battery separator has a moisture content of 2.0% or more.

First, a separator with excellent electrolyte retention properties can be achieved by satisfying (1), which is considered to be due to the following reasons (i) to (iii).

(i) The highest peak that appears when the separator is measured by X-ray diffraction is a peak derived from a zirconia crystal contained in the zirconia particles constituting the separator.
(ii) According to the Scherrer equation, it is known that when the half width of an X-ray diffraction peak is large, the crystallite size is small. When the crystallite size of zirconia is small, the number of crystal edges of zirconia increases.
(iii) Due to the large number of crystal edges of zirconia, hydroxy groups on the crystal surface of zirconia increase, and the hydroxy groups on the crystal surface allow zirconia to contain a large amount of hydration water.

That is, it is considered that the larger the half width of the peak with the highest intensity that appears when the separator is measured by X-ray diffraction, the smaller the crystallite size of zirconia, and the more hydroxyl groups are present on the crystal surface of zirconia. Accordingly, the half width of the peak with the highest intensity that appears when the separator is measured by X-ray diffraction is more preferably 0.60 degrees or more, and further preferably 0.70 degrees or more. The upper limit of the half width is not particularly limited, but an upper limit of 12 degrees or less is realistic.

In the present disclosure, the zirconia particles preferably contain zirconia having a cubic or tetragonal crystal structure because the electrolyte retention properties of the separator become better. Although the reason therefore is not completely clear, it is considered that when zirconia has a cubic or tetragonal crystal structure, zirconia can contain more hydration water due to the difference in crystal structure.

Further, the measurement by X-ray diffraction can be performed using a known X-ray diffraction device according to JIS K 0131 (1996) "General rules for X-ray diffractometric analysis". The half width can be determined from the width of the peak of the X-ray diffraction measurement result at half the height of the peak.

Next, the reason why the separator with excellent electrolyte retention properties can be achieved by satisfying (2) is considered to be that the peak that appears in the range of 3200 to 3600 $cm^{-1}$ in FT-IR of the zirconia particles constituting the separator is a peak derived from hydroxyl groups at crystal edges of zirconia, and zirconia can contain a large amount of hydration water due to the hydroxyl groups on its crystal surface.

Incidentally, in the measurement of the zirconia particles by FT-IR in the present disclosure, the zirconia particles were vacuum-dried at 105°C for 24 hours to remove moisture, and a measurement was performed with a known FT-IR device using the ATR method according to JIS K 0117 (2017) "General rules for infrared spectrophotometric analysis".

Next, the reason why the separator with excellent electrolyte retention properties can be achieved by satisfying (3) is considered to be because the high moisture content of 2.0% or more of the zirconia particles constituting the separator indicates the presence of many hydroxyl groups on the crystal surface of zirconia and zirconia contains a large amount of hydration water due to the many hydroxyl groups on its crystal surface.

The higher the moisture content of the zirconia particles constituting the separator, the more hydration water zirconia contains, and the better the electrolyte retention properties of the separator. Hence, the moisture content of the zirconia particles constituting the separator is more preferably 2.5% or more, and further preferably 3.0% or more. The upper limit of the moisture content is not particularly limited, but an upper limit of 15% or less is realistic.

The moisture content of the zirconia particles in the present disclosure is measured by the following method.

(1) The zirconia particles are allowed to stand at a temperature of 25°C and a humidity of 60% for 3 hours or more.
(2) The mass a (g) of the zirconia particles is measured.
(3) The zirconia particles are vacuum-dried at 105°C for 24 hours.
(4) The mass b (g) of the zirconia particles after the vacuum-drying is measured.
(5) The moisture content W (%) of the zirconia particles is obtained by the following equation.

$$W=\{(a-b)/a\}\times 100$$

The shape of the zirconia particles constituting the separator of the present disclosure may be appropriately selected from, for example, spherical (substantially spherical or true spherical), needle-like, flat, polygonal cubic and feather-like shapes.

The average particle diameter of the zirconia particles of the present disclosure may be appropriately adjusted. When zirconia particles are uniformly present in voids of the porous substrate, the electrolyte is evenly distributed in the separator, resulting in excellent electrolyte retention. Hence, the average diameter of the zirconia particles is preferably 10 um or less, more preferably 2 um or less, and further preferably 1 um or less. The lower limit of the average diameter of the zirconia particles is not particularly limited, but a lower limit of 10 nm or more is realistic.

The average diameter of the zirconia particles is determined by: subjecting the zirconia particles to FPRA1000 manufactured by Otsuka Electronics Co., Ltd. (the measurement range of 3 nm to 5000 nm); performing a continuous measurement for 3 minutes by the dynamic light scattering method; and analyzing particle diameter measurement data obtained from scattering intensity. Specifically, the particle diameter measurement is performed five times, and the resulting particle diameter measurement data are arranged in order of particle diameter distribution width from narrowest to widest. The particle diameter ($D_{50}$) at the 50% point of the cumulative distribution of the zirconia particles in the particle diameter measurement data indicating the third narrowest particle diameter distribution width (hereinafter, abbreviated as $D_{50}$) is defined as the average diameter of the zirconia particles. The temperature of a dispersion liquid used in the measurements is adjusted to 25°C, and water at 25°C is used as a blank for scattering intensity.

The particle diameter distribution of the zirconia particles of the present disclosure may be appropriately adjusted. If many zirconia particles with large diameters are present, the zirconia particles may fall off and pinholes may be easily formed. If many zirconia particles with small diameters are present, voids in the porous substrate may be clogged.

Therefore, the diameter distribution of the zirconia particles is preferably in the range of ($D_{50}/2$) or more and ($D_{50} \times 2$) or less. The particle diameter distribution of the zirconia particles is determined from the particle diameter measurement data obtained from scattering intensity measured using the dynamic light scattering method as described above.

Further, since the higher the specific surface area of the zirconia particles, the better the electrolyte retention properties of the separator, the specific surface area of the zirconia particles is preferably 5 m$^2$/g or more, more preferably 20 m$^2$/g or more, and further preferably 100 m$^2$/g or more. If the specific surface area is too high, the zirconia particles become brittle and may fall off from the separator. Hence, a specific surface area of the zirconia particles of 500 m$^2$/g or less is realistic.

Incidentally, the "specific surface area" of the present disclosure refers to a value obtained as follows: Zirconia particles are treated in vacuum at a temperature of 70°C for 4 hours, then cooled to room temperature and evacuated to $1 \times 10^{-3}$ Torr. Approximately 0.5 g of the particles are weighed as a sample, and the specific surface area of the sample is measured by the BET method using a gas adsorption measurement device (BELSORP 28A manufactured by BEL JAPAN, Inc.). As an adsorption gas, krypton is used.

The higher the zirconia particle content of the separator of the present disclosure, the higher the specific surface area of the separator and hence the better the electrolyte retention properties and the more reliably a short circuit can be prevented from occurring in an alkaline battery. On the other hand, when the zirconia particle content is too high, voids in the porous substrate contained in the separator may be clogged by the zirconia particles, which may cause an increase in internal resistance and internal pressure of the battery. Accordingly, the zirconia particle content is preferably 10 to 70 mass%, more preferably 20 to 60 mass%, and further preferably 35 to 50 mass%.

(Porous substrate)

The separator of the present disclosure includes a porous substrate in addition to the zirconia particles. In the separator of the present disclosure, the porous substrate mainly serves as a framework of the separator.

The type of the porous substrate may be appropriately selected. Examples thereof include fiber structures such as a nonwoven fabric, a woven fabric, and a knitted fabric; single materials such as a porous film or porous foam with breathability and liquid permeability; multiple layers of a single type of material; and multiple layers of two or more types of materials. Among these, fiber structures are preferable because they are excellent in strength. Among fiber structures, a nonwoven fabric that can achieve high porosity is more preferable.

The material that constitutes the porous substrate may be any known organic polymer such as a polyolefin-based resin (e.g., polyethylene, polypropylene, polymethylpentene, a polyolefin-based resin having a structure in which some hydrocarbons are replaced by cyano groups or halogens such as fluorine or chlorine, etc.), a styrene-based resin, a polyvinyl alcohol-based resin, a polyether-based resin (e.g., polyether ether ketone, polyacetal, modified polyphenylene ether, aromatic polyetherketone, etc.); a polyimide-based resin, a polyamideimide resin, a polyamide resin (e.g., an aromatic polyamide resin, an aromatic polyetheramide resin, etc.), a nylon-based resin, which is a kind of a polyamide-based resin (e.g., nylon 6, nylon 66, etc.), a urethane-based resin, an epoxy-based resin, a polysulfone-based resin (e.g., polysulfone, polyethersulfone, etc.), a fluorine-based resin (e.g., polytetrafluoroethylene, polyvinylidene fluoride, etc.), a cellulose-based resin, a polybenzimidazole resin, an acrylic-based resin (e.g., a polyacrylonitrile-based resin obtained by copolymerizing a polyacrylic acid ester, a polymethacrylic acid ester, polyacrylonitrile, an acrylic acid ester, a methacrylic acid ester, etc.; or a modacrylic resin obtained by copolymerizing acrylonitrile and vinyl chloride or vinylidene chloride, etc.). Among these, the porous substrate is preferably made of a polyolefin-based resin or a nylon-based resin since they are excellent in electrolyte resistance.

Incidentally, these organic polymers may be either linear or branched and may be either block or random copolymers. The organic polymers may have any steric structure and may be crystalline or not. Furthermore, the organic polymers may be a mixture of multicomponent organic polymers.

When the porous substrate has a fiber structure, constituent fibers of the fiber structure can be obtained by a known method such as a dry spinning method, a wet spinning method, a direct spinning method (e.g., a melt blowing method, a spunbond method, an electrostatic spinning method, a method of spinning by discharging a spinning stock solution and a gas flow in parallel [e.g., the method disclosed in JP2009-287138A], etc.), a method for extracting fibers with a thin diameter by removing one or more resin components from a composite fiber, and a method of obtaining split fibers by beating fibers.

Fibers constituting the fiber structure may be made of one type of organic polymers or may be made of a plurality of types of organic polymers. The fibers composed of a plurality of types of organic polymers may be in a form generally referred to as a composite fiber such as a core-sheath type, a sea island type, a side-by-side type, an orange type, a bimetal type, or the like.

The fiber structure may include an adhesive fiber as a constituent fiber. The inclusion of an adhesive fiber is preferable since it improves the strength of the fiber structure. The type of the adhesive fiber may be appropriately selected. For example, a core-sheath fiber, a side-by-side fiber, or a fully fused fiber can be employed.

Further, the fiber structure may include, as a constituent fiber, a modified cross section fiber in addition to a fiber having a substantially circular cross section or an oval cross section. The modified cross section fiber may be a fiber having a cross section in a polygonal shape such as a triangular shape, a shape of an alphabet letter such as a Y shape, an irregular shape, a multi-leaf shape, a shape of a symbol such as an asterisk shape, or a fiber having a cross section in which two or more of these shapes are combined, for example.

The separator has a denser structure as the average fiber diameter of the fibers constituting the fiber structure decreases. The denser structure makes the alkaline battery less prone to short-circuiting and also makes the voids small and uniform in size, which tends to prevent an internal short circuit. Therefore, the average fiber diameter of the fibers constituting the fiber structure is, for example, preferably 15 um or less, more preferably 10 um or less, and most preferably 8 um or less. The lower limit of the average fiber diameter of the fibers is not particularly limited, but a lower limit of 0.01 um or more is realistic.

The "average fiber diameter" as used herein refers to an arithmetic mean value of the diameters of 100 fibers randomly selected by analyzing an electron micrograph of a cross section of the separator containing a fiber structure or fibers, and the fiber diameter refers to the diameter of a circle having the same area as the cross-sectional area of a fiber.

Further, the fiber length may also be selected appropriately, and it may be 0.5 to 150 mm. The fiber structure may be made of a continuous fiber depending on the fiber production method. Incidentally, the fibers of the fiber structure may include two or more types of fibers that differ in terms of the average fiber diameter and/or the fiber length.

The characteristics of the porous substrate, such as basis weight and thickness, may be appropriately adjusted to obtain a separator that can contain a sufficient amount of zirconia and provide an alkaline battery that is resistant to internal short circuits.

Further, for example, the porous substrate may be hydrophilized for the purpose of facilitating the application of a mixture solution (described later) to the porous substrate. The method for hydrophilizing the porous substrate may be appropriately selected. Examples thereof include plasma treatment, sulfonation treatment, fluorine gas treatment, corona charging treatment, and the like.

The separator of the present disclosure includes a porous substrate and zirconia particles. The zirconia particles are preferably adhered to the porous substrate such that the zirconia particles become difficult to fall off from the separator. Examples of the adhesion of the zirconia particles to the porous substrate include adhesion with a binder and adhesion by deforming a part of the porous substrate by melting solidification or softening. Among these, adhesion with a binder is preferable because the porous substrate and the zirconia particles firmly adhere to each other, and the zirconia particles become difficult to fall off from the separator.

Types of the binder that can be used include, for example, a polyolefin-based resin, an acrylic-based resin (e.g., ethyl acrylate, methyl acrylate, butyl acrylate, 2-ethylhexyl acrylate, ethyl methacrylate, methyl methacrylate, butyl methacrylate, 2-ethylhexyl methacrylate, etc.), an ethylene-acrylate copolymer such as an ethylene-ethyl acrylate copolymer, rubbers and derivatives thereof (e.g., styrene-butadiene rubber [SBR], fluoro rubber, urethane rubber, ethylene-propylene-diene rubber [EPDM], etc.), polyethylene glycol (PEG), cellulose derivatives (e.g., carboxymethylcellulose [CMC], hydroxyethyl cellulose, hydroxypropylcellulose, etc.), polyvinyl butyral (PVB), polyvinylpyrrolidone (PVP), a polyurethane-based resin, an epoxy-based resin, polyvinylidene fluoride, and a vinylidene fluoride-hexafluoropropylene copolymer. Among these, it is preferable to use an acrylic-based resin because it is excellent in electrolyte resistance and can fix zirconia particles stably for a long period of time to maintain the electrolyte retention properties of the separator. Incidentally, these may be used alone or in combination of two or more.

The zirconia particles can be present in the separator only on the surface of the porous substrate or both on the surface of the porous substrate and in voids of the porous substrate. When the zirconia particles are present both on the surface and in voids of the porous substrate, the zirconia particles are less likely to deposit and aggregate in a layer on the surface of the porous substrate and tend to disperse inside the porous substrate, compared with the case in which the zirconia particles are present only on the surface of the porous substrate. That is, the zirconia particles are preferably present both on the surface and in voids of the porous substrate since they do not aggregate and their surfaces are exposed, thereby contributing to an increase in the specific surface area of the separator. In addition, if a layer of the zirconia particles is present on the surface of the porous substrate, the distribution of the electrolyte inside the separator becomes uneven when the separator retains the electrolyte, which may lead to an increase in the electrical resistance of the battery. Hence, it is preferable that there be no layer of the zirconia particles on the surface of the porous substrate.

Further, the content ratio of the binder to the zirconia particles contained in the separator may be appropriately adjusted. If the content ratio of the binder to the zirconia particles contained in the separator is too high, the binder may coat the zirconia particles and inhibit the action of zirconia, and the electrolyte retention properties may not be sufficiently improved. On the other hand, if the content ratio of the binder to the zirconia particles contained in the separator is too low, zirconia particles contained in the alkaline battery separator may fall off and the parts from which the zirconia particles fell off may become pinholes, which may cause an internal short circuit in the battery. Therefore, the content ratio of the binder to the zirconia particles contained in the separator is preferably 0.05 to 10 mass%, more preferably 0.1 to 5 mass%, and further preferably 0.2 to 4 mass%.

The basis weight of the separator of the present disclosure may be appropriately adjusted and may be 2 to 80 $g/m^2$, 5 to 50 $g/m^2$, or 10 to 30 $g/m^2$. The "basis weight" as used herein refers to the mass per 1 $m^2$ of a main surface, which is the widest surface.

Regarding the thickness of the separator of the present disclosure, a thin separator tends to reduce the internal resistance of the battery; however, if it is too thin, there is a risk of poor internal short circuit resistance. Accordingly, the thickness of the separator is preferably 5 to 100 um, more preferably 10 to 70 um, and further preferably 30 to 60 um. The "thickness" as used herein refers to the average value of ten randomly selected separators measured using an outside micrometer (measurement range: 0 to 25 mm) specified in 3.1 of JIS B 7502 (2016) "Micrometers".

The separator of the present disclosure can be manufactured as follows, for example.

First, a porous substrate is prepared. When the porous substrate is a porous film or porous foam with breathability and liquid permeability, the preparation method may be appropriately selected. The porous substrate may be prepared by a known method such as molding by pouring a molten organic polymer into a mold or foaming treatment. When the porous substrate is a woven or knitted fabric, the porous substrate may be prepared by weaving or knitting fibers.

When the porous substrate is a nonwoven fabric, a fiber web is first formed from fibers by a dry laid method (e.g., a card method or an air lay method) or a wet laid method. Among these, it is preferable to form a fiber web by a wet laid method, in which fibers are uniformly dispersed to facilitate production of a separator with little unevenness in fiber dispersion. Examples of the wet laid method include conventionally known methods such as a flat long-wire type, an inclined short-wire type, a cylindrical type, and a long-wire/cylindrical type. Incidentally, when two or more layers are combined, it is preferable to combine fiber webs made of the same fiber blend such that a separator having a single layer structure can be produced.

Next, fibers constituting the fiber web are bonded to prepare a nonwoven fabric. The method of bonding the fibers together may be appropriately selected. Examples of the method include a method of entangling fibers with a needle or a water stream, a method of adhering fibers with a binder, and a method of bonding fibers together through fusion by melting and solidifying the surface of an adhesive fiber. Incidentally, as a method of heat treatment, it is possible to use a method of heating and pressurizing with a calender roll, a method of heating with a hot air dryer, or a method of irradiating infrared rays under no pressure, for example. Alternatively, a nonwoven fabric may be prepared by collecting fibers spun using a direct spinning method.

Further, the porous substrate may be hydrophilized by the above-described method to help the porous substrate contain the mixture solution (described later).

Next, zirconia particles are bonded to the porous substrate. Examples of the method for bonding zirconia particles to the porous substrate include a method of adhesion with a binder and a method of bonding by deforming a part of the porous substrate by melting solidification or softening. Among them, the method of adhesion with a binder may be selected as appropriate. For example, a zirconia mixture solution (hereinafter also referred to as a mixture solution) is prepared by mixing a binder and zirconia particles in a solvent or dispersion medium, and one of (1) to (3) below is performed.

1. The porous substrate is immersed in the mixture solution.
2. The mixture solution is sprayed on the porous substrate.
3. The mixture solution is applied to one or both main surfaces of the porous substrate using a coater such as a kiss coater with a gravure roll.

Subsequently, the porous substrate containing the mixture solution is dried to remove the solvent or dispersion medium of the mixture solution.

In the case where the binder is present as a solid, e.g., as particles in the mixture solution, it is preferable to bond zirconia particles to the porous substrate by deforming the solid binder by melting solidification or softening during the drying described above. Here, the shape of the binder particles present in the mixture solution may be appropriately selected, and may be selected from, for example, spherical (substantially spherical or true spherical), needle-like, flat, polygonal cubic, and feather-like shapes. The type of the solvent or dispersion medium may be appropriately selected. For example, water, alcohols, ethers, and the like may be used alone or in mixture.

Further, in order to prevent aggregation of the binder and the zirconia particles and improve dispersibility, a surfactant (a cationic surfactant, an anionic surfactant, a nonionic surfactant, etc.) and the like may be added to the mixture solution. The amount added may be appropriately adjusted.

The method of drying the porous substrate containing the mixture solution may be appropriately selected. For example, a method of removing the solvent or dispersion medium using a heater such as a near-infrared heater, a far-infrared heater, or a halogen heater, or a method of removing the solvent or dispersion medium by using hot air or blowing air may be used. In addition, a known method such as a method of allowing the porous substrate containing the mixture solution to stand at room temperature (25°C), a method of exposing the porous substrate under decompression conditions, or a method of exposing the porous substrate to an atmosphere above the temperature at which the solvent or dispersion medium can volatilize may be used.

EXAMPLE

Hereinafter, the present disclosure will be specifically described with reference to Examples, but the present disclosure is not limited to the Examples.

(Preparation of zirconia particles and yttria particles)

Zirconia particles A to D, yttria-containing zirconia particles, and yttria particles were prepared.

Table 1 below shows the zirconia content ($ZrO_2$ content), the average particle diameter, the specific surface area, the presence or absence of a peak that appears in the range of 3200 to 3600 $cm^{-1}$ when the particles are measured by FT-IR by the method above (presence or absence of IR peak), and the moisture content measured by the method above, for each of the particle types. Incidentally, the yttria particles were measured by the same method as the zirconia particles.

[Table 1]

(Example 1)

(Method of preparation of nonwoven fabric)

A core-sheath type composite fiber whose core component was homopolypropylene and sheath component was high density polyethylene (volume ratio of the core component to the sheath component is 60:40, fineness: 0.8 dtex, fiber length: 5 mm) was prepared. A sea island type composite unstretched fiber in which 61 island components made of polypropylene were present in the sea component made of polyethylene terephthalate was spun by a composite spinning method and stretched to produce a sea island type composite stretched fiber. The sea island type composite stretched fiber was immersed in an alkaline aqueous solution for 120 minutes to extract and remove polyethylene terephthalate, which was the sea component. Then, it was cut to produce polypropylene ultrafine fibers having substantially the same fiber diameter in the length direction (fiber diameter: 2.0 um, fiber length: 3 mm, melting point: 168°C, cross-sectional shape: circular). The polypropylene ultrafine fibers were not fibrillated and were stretched, and each fiber had substantially the same fiber diameter.

Next, 60 mass% of the core-sheath type composite fiber and 40 mass% of the ultrafine fibers were mixed to prepare a fiber web by a wet sheet making method.

Thereafter, the fiber web was treated with hot air having a temperature of 140°C for 10 seconds and subjected to a calender roll at 40°C. The roll pressure applied to the fiber web was adjusted, and a nonwoven fabric in which only the sheath component of the core-sheath composite fiber was fused (basis weight: 13 g/m$^2$, thickness: 50 μm) was prepared. Incidentally, the nonwoven fabric was composed only of fibers.

The prepared nonwoven fabric was subjected to plasma treatment, thereby preparing a hydrophilized nonwoven fabric (basis weight: 13 g/m$^2$, thickness: 50 μm).

(Preparation of mixture solution A)

Mixture solution components, i.e., 29.9 mass% of the zirconia particles A, 0.1 mass% of an acrylic-based resin, and 70 mass% of water were mixed to prepare a mixture solution A with a solid content concentration of 30 mass%. Incidentally, the zirconia particles A were uniformly dispersed without aggregation in the mixture solution A.

(Application of mixture solution A to nonwoven fabric and drying)

The mixture solution A was applied to the whole of one of the main surfaces of the hydrophilized nonwoven fabric by a kiss coater method using a gravure roll such that the mass of the zirconia particles A was 12 g/m$^2$. Thereafter, the hydrophilized nonwoven fabric to which the mixture solution A had been applied was subjected to a dryer equipped with a far-infrared heater to remove water from the mixture solution A in the hydrophilized nonwoven fabric. Thus, a separator (basis weight: 25 g/m$^2$, thickness: 50 um, percentage of the zirconia particles A in the separator: 48 mass%) was prepared. Incidentally, in the separator, the zirconia particles A were present on the surface and in voids of the nonwoven fabric, and no layer of the zirconia particles A was present on the surface of the nonwoven fabric.

(Example 2)

First, the same hydrophilized nonwoven fabric as in Example 1 was prepared.

(Preparation of mixture solution B)

Next, mixture solution components, i.e., 29.9 mass% of the zirconia particles B, 0.1 mass% of the acrylic-based resin, and 70 mass% of water were mixed to prepare a mixture solution B with a solid content concentration of 30 mass%. Incidentally, the zirconia particles B were uniformly dispersed without aggregation in the mixture solution B.

(Application of mixture solution B to nonwoven fabric and drying)

The mixture solution B was applied and dried in the same manner as in Example 1 except that the mixture solution B was applied to the hydrophilized nonwoven fabric such that the mass of the zirconia particles B was 12 g/m$^2$, thereby preparing a separator (basis weight: 25 g/m$^2$, thickness: 50 um, percentage of the zirconia particles B in the separator: 48 mass%). Incidentally, in the separator, the zirconia particles B were present on the surface and in voids of the nonwoven fabric, and no layer of the zirconia particles B was present on the surface of the nonwoven fabric.

(Comparative Example 1)

First, the same hydrophilized nonwoven fabric as in Example 1 was prepared.

(Preparation of mixture solution C)

Next, mixture solution components, i.e., 29.9 mass% of the zirconia particles C, 0.1 mass% of the acrylic-based resin, and 70 mass% of water were mixed to prepare a mixture solution C with a solid content concentration of 30 mass%. Incidentally, the zirconia particles C were uniformly dispersed without aggregation in the mixture solution C.

(Application of mixture solution C to nonwoven fabric and drying)

The mixture solution was applied and dried in the same manner as in Example 1 except that the mixture solution C was applied to the hydrophilized nonwoven fabric such that the mass of the zirconia particles C was 12 $g/m^2$, thereby preparing a separator (basis weight: 25 $g/m^2$, thickness: 50 um, percentage of the zirconia particles C in the separator: 48 mass%). Incidentally, in the separator, the zirconia particles C were present on the surface and in voids of the nonwoven fabric, and no layer of the zirconia particles C was present on the surface of the nonwoven fabric.

(Comparative Example 2)

First, the same hydrophilized nonwoven fabric as in Example 1 was prepared.

(Preparation of mixture solution D)

Next, mixture solution components, i.e., 29.9 mass% of the zirconia particles D, 0.1 mass% of the acrylic-based resin, and 70 mass% of water were mixed to prepare a mixture solution D with a solid content concentration of 30 mass%. Incidentally, the zirconia particles D were uniformly dispersed without aggregation in the mixture solution D.

(Application of mixture solution D to nonwoven fabric and drying)

The mixture solution was applied and dried in the same manner as in Example 1 except that the mixture solution D was applied to the hydrophilized nonwoven fabric such that the mass of the zirconia particles D was 12 $g/m^2$, thereby preparing a separator (basis weight: 25 $g/m^2$, thickness: 50 um, percentage of the zirconia particles D in the separator: 48 mass%). Incidentally, in the separator, the zirconia particles D were present on the surface and in voids of the nonwoven fabric, and no layer of the zirconia particles D was present on the surface of the nonwoven fabric.

(Comparative Example 3)

First, the same hydrophilized nonwoven fabric as in Example 1 was prepared.

(Preparation of mixture solution E)

Next, mixture solution components, i.e., 29.9 mass% of the yttria-containing zirconia particles, 0.1 mass% of the acrylic-based resin, and 70 mass% of water were mixed to prepare a mixture solution E with a solid content concentration of 30 mass%. Incidentally, the yttria-containing zirconia particles were uniformly dispersed without aggregation in the mixture solution E.

(Application of mixture solution E to nonwoven fabric and drying)

The mixture solution was applied and dried in the same manner as in Example 1 except that the mixture solution E was applied to the hydrophilized nonwoven fabric such that the mass of the yttria-containing zirconia particles was 12 $g/m^2$, thereby preparing a separator (basis weight: 25 $g/m^2$, thickness: 50 um, percentage of the yttria-containing zirconia particles in the separator: 48 mass%). Incidentally, in the separator, the yttria-containing zirconia particles were present on the surface and in voids of the nonwoven fabric, and no layer of the yttria-containing zirconia particles was present on the surface of the nonwoven fabric.

(Comparative Example 4)

First, the same hydrophilized nonwoven fabric as in Example 1 was prepared.

(Preparation of mixture solution F)

Next, mixture solution components, i.e., 29.9 mass% of the yttria particles, 0.1 mass% of the acrylic-based resin, and 70 mass% of water were mixed to prepare a mixture solution F with a solid content concentration of 30 mass%. Incidentally, the yttria particles were uniformly dispersed without aggregation in the mixture solution F.

(Application of mixture solution F to nonwoven fabric and drying)

The mixture solution was applied and dried in the same manner as in Example 1 except that the mixture solution F was applied to the hydrophilized nonwoven fabric such that the mass of the yttria particles was 12 g/m$^2$, thereby preparing a separator (basis weight: 25 g/m$^2$, thickness: 50 um, percentage of the yttria particles in the separator: 48 mass%). Incidentally, in the separator, the yttria particles were present on the surface and in voids of the nonwoven fabric, and no layer of the yttria particles was present on the surface of the nonwoven fabric.
Table 2 shows the inorganic particles contained in the separators of Examples and Comparative Examples as well as the basis weight, the inorganic particle content, the thickness, and the percentage of the zirconia particles or the yttria particles (inorganic particle content percentage) of the separators.

[Table 2]

|  | Inorganic particle | Separator basis weight (g/m$^2$) | Inorganic particle content (g/m$^2$) | Separator thickness ($\mu$m) | Inorganic particle content percentage (mass%) |
|---|---|---|---|---|---|
| Example 1 | Zirconia particle A | 25 | 12 | 50 | 48 |
| Example 2 | Zirconia particle B | 25 | 12 | 50 | 48 |
| Comparative Example 1 | Zirconia particle C | 25 | 12 | 50 | 48 |
| Comparative Example 2 | Zirconia particle D | 25 | 12 | 50 | 48 |
| Comparative Example 3 | Yttria-containing zirconia particle | 25 | 12 | 50 | 48 |
| Comparative Example 4 | Yttria particle | 25 | 12 | 50 | 48 |

Next, the position of the peak with the highest intensity (X-ray diffraction measurement peak position) and the half width of the peak with the highest intensity (X-ray diffraction measurement peak half width) in the X-ray diffraction measurements of the separators of Examples and Comparative Examples were measured by the above-described methods. The KOH aqueous solution drop absorption time, the liquid retention rate under pressure and the electrical resistance were measured and evaluated as described in the following sections: "Measurement of KOH aqueous solution drop absorption time", "Measurement of liquid retention rate under pressure", and "Measurement of electrical resistance".
(Measurement of KOH aqueous solution drop absorption time)

(1) Five 5 cm square samples were taken from each of the separators.
(2) 30 pl of a potassium hydroxide (KOH) aqueous solution with a density of 1.3 g/cm$^3$ at 20°C was added dropwise to each sample and the time taken for complete absorption of the aqueous solution was measured.
(3) The measurement of (2) was performed for each sample, five times in total, and the average value was used as the KOH aqueous solution drop absorption time. If the absorption of the KOH aqueous solution took 300 seconds or more in any of the five measurements, the KOH aqueous solution drop absorption time was determined to be 300 seconds or more.

(Measurement of liquid retention rate under pressure)

(1) Three 5 cm square samples were taken from each of the separators, and the mass (a [unit: g]) of each sample was measured.

(2) Each sample was immersed in an electrolyte (a potassium hydroxide aqueous solution with a density of 1.3 g/cm$^3$ at 20°C) to fill voids in the sample with the electrolyte.

(3) Each sample was covered on both sides with three sheets of filter paper (model number: ADVANTEC-TYPE2) and compressed at a pressure of 23 MPa to blot the electrolyte with the filter paper.

(4) The mass (b [unit: g]) of each sample from which the electrolyte had been blotted was measured, and the liquid retention rate under pressure R (%) was calculated by the following equation. This measurement was performed for each sample, three times in total, and the average value was used as the liquid retention rate under pressure.

$$R = [(b-a)/a] \times 100$$

(Measurement of electrical resistance)

(1) Three 5 cm square samples were taken from each of the separators, and the mass of each sample was measured.

(2) After each sample absorbed the potassium hydroxide aqueous solution with a density of 1.3 g/cm$^3$ at 20°C in an amount of 50 mass% of the mass of the sample, the sample was sandwiched by 35 mm square nickel plates to measure electrical resistance ($\Omega$) at a load of 49 N. This measurement was performed for each sample, three times in total, and the average value was used as the electrical resistance.

Table 3 below shows measurement results of the separators of Examples and Comparative Examples.

[Table 3]

| | Inorganic particle | X-ray diffraction measurement peak position ($2\theta$,°) | X-ray diffraction measurement peak half width (°) | KOH aqueous solution drop absorption time (s) | Liquid retention rate under pressure (%) | Electrical resistance ($\Omega$) |
|---|---|---|---|---|---|---|
| Example 1 | Zirconia particle A | 28.2 | 0.75 | 20 | 24.0 | 0.4 |
| Example 2 | Zirconia particle B | 30.2 | 9.46 | 25 | 33.0 | 0.3 |
| Comparative Example 1 | Zirconia particle C | 28.2 | 0.35 | 135 | 15.0 | 0.8 |
| Comparative Example 2 | Zirconia particle D | 28.2 | 0.38 | 245 | 12.0 | 0.8 |
| Comparative Example 3 | Yttria-containing zirconia particle | 28.2 | 0.35 | 300 or more | 7.8 | 1.1 |
| Comparative Example 4 | Yttria particle | 29.3 | 0.24 | 300 or more | 12.0 | 0.9 |

From the comparison of Examples and Comparative Examples, it has been found that a separator satisfying the configurations of the present disclosure is a separator that has a short KOH drop absorption time and is easy to get wet while having a high liquid retention rate under pressure, a low electrical resistance, and excellent electrolyte retention properties.

INDUSTRIAL APPLICABILITY

The alkaline battery separator of the present disclosure can be suitably used as a separator for primary batteries using an alkaline electrolyte and for alkaline secondary batteries such as a nickel-metal hydride battery, a nickel-cadmium battery, a nickel-zinc battery, and the like.

**Claims**

1. An alkaline battery separator, comprising

   a porous substrate; and
   zirconia particles, wherein
   the half width of the peak with the highest intensity that appears when the alkaline battery separator is measured by X-ray diffraction is 0.40 degrees or more.

2. An alkaline battery separator, comprising

   a porous substrate; and
   zirconia particles, wherein
   the zirconia particles contained in the alkaline battery separator has a peak in the range of 3200 to 3600 cm$^{-1}$ when measured by FT-IR.

3. An alkaline battery separator, comprising

   a porous substrate; and
   zirconia particles, wherein
   the zirconia particles contained in the alkaline battery separator has a moisture content of 2.0% or more.

4. The alkaline battery separator according to any one of claims 1 to 3, wherein the porous substrate and the zirconia particles are bonded by a binder containing an acrylic-based resin.

5. The alkaline battery separator according to any one of claims 1 to 4, wherein the zirconia content of the zirconia particles is 95 mass% or more.

6. The alkaline battery separator according to any one of claims 1 to 5, wherein the zirconia particles include zirconia having a cubic or tetragonal crystal structure.

| INTERNATIONAL SEARCH REPORT | International application No. |
|---|---|
| | **PCT/JP2022/026876** |

**A.  CLASSIFICATION OF SUBJECT MATTER**

*H01M 50/489*(2021.01)i; *H01M 50/42*(2021.01)i; *H01M 50/434*(2021.01)i; *H01M 50/443*(2021.01)i; *H01M 50/446*(2021.01)i; *H01M 50/451*(2021.01)i

FI:   H01M50/489; H01M50/451; H01M50/443 M; H01M50/434; H01M50/42; H01M50/446

According to International Patent Classification (IPC) or to both national classification and IPC

**B.  FIELDS SEARCHED**

Minimum documentation searched (classification system followed by classification symbols)

H01M50/489; H01M50/42; H01M50/434; H01M50/443; H01M50/446; H01M50/451

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| A | WO 2020/255856 A1 (NGK INSULATORS LTD.) 24 December 2020 (2020-12-24) entire text, all drawings | 1-6 |
| A | WO 2017/221451 A1 (NGK INSULATORS LTD.) 28 December 2017 (2017-12-28) entire text, all drawings | 1-6 |
| A | JP 2000-215872 A (DAIWABO CO., LTD.) 04 August 2000 (2000-08-04) entire text, all drawings | 1-6 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 September 2022** | **20 September 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/026876**

| Patent document cited in search report | | | Publication date (day/month/year) | Patent family member(s) | | | Publication date (day/month/year) |
|---|---|---|---|---|---|---|---|
| WO | 2020/255856 | A1 | 24 December 2020 | US<br>all | 2021/0184268 | A1 | |
| | | | | CN | 114041233 | A | |
| WO | 2017/221451 | A1 | 28 December 2017 | US<br>all | 2019/0123322 | A1 | |
| | | | | EP | 3477736 | A1 | |
| | | | | CN | 109314211 | A | |
| JP | 2000-215872 | A | 04 August 2000 | (Family: none) | | | |

Form PCT/ISA/210 (patent family annex) (January 2015)

**REFERENCES CITED IN THE DESCRIPTION**

**Patent documents cited in the description**

- JP 11315472 A
- JP 2009287138 A